# EUROPEAN PATENT APPLICATION

(11) **EP 2 334 060 A2**
(43) Date of publication of application: **15.06.2011**
(21) Application number: 10191476.0
(22) Date of filing: 17.11.2010
(51) Int. Cl.: H04N 5/445

(54) **Display Apparatus and Method for Producing Image Registration Thereof**

(30) Priority: 14.12.2009 KR 20090123789
(71) Applicant: SAMSUNG ELECTRONICS CO., LTD., Suwon-si, Gyeonggi-do (KR)
(72) Inventor: Jang, Yong-seok, Gyeonggi-do (KR)
(74) Representative: Bruce, Alexander Richard Henry

(57) **Abstract**

Disclosed are a display apparatus and method for producing image registration thereof. The display apparatus comprising: a receiver which receives a broadcasting signal comprising information about a broadcast image and three-dimensional (3D) information of at least one area of the broadcast image; a signal processor which extracts the 3D information of the at least one area from the received broadcasting signal, registers at least one additional image to the at least one area using the extracted 3D information and outputs an output signal including the registered at least one additional image; and a display unit which displays the broadcasting image output by the signal processor.

## Description

The present invention relates to a display apparatus and a method for producing an image registration thereof, and more particularly, to a display apparatus and a method for producing an image registration thereof which registers an additional image to a particular area of a broadcasting image and displays the broadcasting signal registering the additional image thereto.

As used herein, the term "image registration" and the like, includes overlaying two or more images, whereby different sets of image data are transformed into one coordinate system.

If an image is filmed on the street instead of in a set for broadcasting, the street becomes the background and advertisement banners on the street are also filmed as the background. Then, the advertisement banners as the background are indirectly advertised, unintentionally.

If a predetermined area of a broadcasting image is replaced with another image in the conventional art, the replacement is included in the broadcasting image like a banner. Thus, much of the broadcasting image is replaced or reduced, and a user's viewing of a broadcasting signal may be interfered with.

Exemplary embodiments of the present invention may overcome the above disadvantages and other disadvantages not described above. Also, the present invention is not required to overcome the disadvantages described above, and an exemplary embodiment of the present invention may not overcome any of the problems described above.

Accordingly, one or more exemplary embodiments provide a display apparatus and a method for producing an image registration thereof which replaces a part of a broadcasting signal with another image while causing no impediment to viewing of the broadcasting signal.

According to an aspect of the present invention, there is a provided a display apparatus which may include: a receiver which receives a broadcasting signal comprising information about a broadcast image and three-dimensional (3D) information of at least one area of the broadcast image; a signal processor which extracts the 3D information of the at least one area from the received broadcasting signal, registers at least one additional image to the at least one area using the extracted 3D information and outputs an output signal including the registered at least one additional image; and a display unit which displays the broadcasting image output by the signal processor.

The 3D information may include location information of the at least one area.

The 3D information may further include depth information of the at least one area.

The display apparatus may further include a second receiver which receives the at least one additional image.

The display apparatus may further include a storage unit which stores the at least one additional image.

The display apparatus may further include a user input receiver which receives information of a user's interest for the at least one additional image, and a controller which selects the additional image, based on the received user's interest, from among a received additional image and a stored additional image, and controls the signal processor to register the selected additional image to the area.

The display apparatus may further include a controller which selects the at least one additional image, based on metadata, from among a received additional image and a stored additional image, and controls the signal processor to register the selected additional image to the area.

The signal processor may further warp the least one additional image and registers the warped at least one additional image to the area.

The user input receiver may include a touch screen.

Another aspect of the present invention provides a method for producing an image registration of a display apparatus, whereby the method may include: receiving broadcasting signal having information about a broadcast image and three-dimensional (3D) information of at least one area of the broadcast image; extracting the 3D information from the received broadcasting signal; registering the at least one additional image to the at least one area using the extracted 3D information; and displaying an output image including the registered at least one additional image.

The method may further include receiving information of a user's interest for the at least one additional image; and selecting the at least one additional image, based on the received user's interest, from among a received additional image and a stored additional image, wherein the registering includes registering the selected additional image to the area.

The method may further include selecting the at least one additional image, based on metadata, from among a received additional image and a stored additional image.

The method may further include warping the at least one additional image, wherein the registering includes registering the warped at least one additional image to the area.

The information of the user's interest for the additional image may be received via a touch screen.

The above and/or other aspects will become apparent and more readily appreciated from the following description of the exemplary embodiments, taken in conjunction with the accompanying drawings, in which:
FIG. 1 is a control block diagram of a display apparatus according to an exemplary embodiment of the present invention;
FIG. 2 illustrates an example of registering an image to a related art broadcasting signal;
FIG. 3 illustrates an example of a broadcasting signal registering an additional image thereto according to an exemplary embodiment of the present invention;
FIG. 4 is a flowchart of a process of producing an image registration according to an exemplary embodiment of the present invention; and
FIG. 5 is a flowchart of a process of producing an image registration according to another exemplary embodiment of the present invention.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

The terms "warp," "warping" and the like, as used herein, includes a process of digitally manipulating an image such that a shape in the image is distorted.

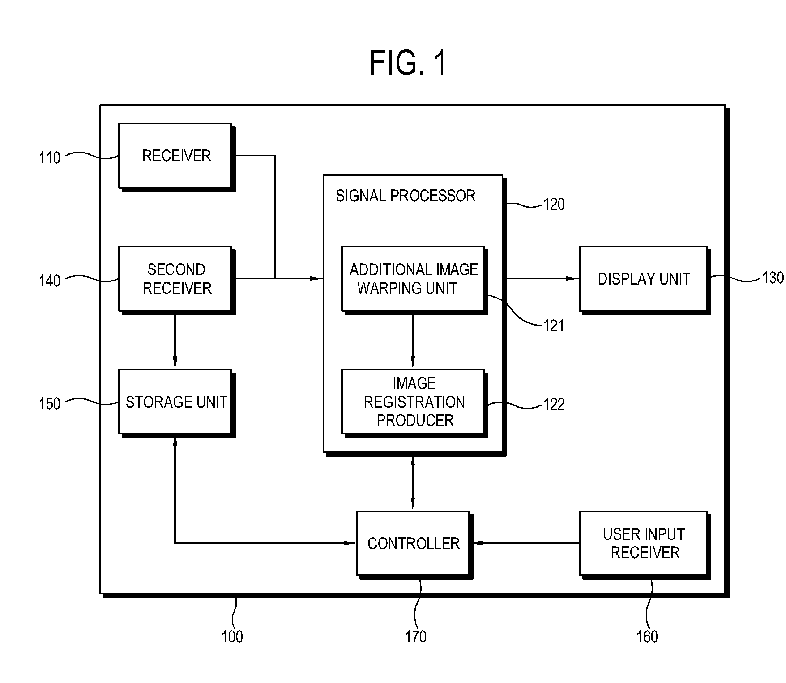

FIG. 1 is a control block diagram of a display apparatus according to an exemplary embodiment of the present invention. As shown therein, the display apparatus according to an exemplary embodiment of the present invention may include a receiver 110, a signal processor 120 and a display unit 130.

The receiver 110 may receive a broadcasting signal including three-dimensional (3D) information of at least a particular area of an image broadcast within the broadcasting signal. It should be noted that, as used herein, the term "area" includes an area within an image.

The broadcasting signal includes a broadcasting signal transmitted by any type of broadcasting signal transmission device including, but not limited to, cable, satellite and terrestrial broadcasting signals. The broadcasting signal may include both of 2D and 3D broadcasting signals. The receiver 110 may further include a tuner (not shown) to tune a channel based on a user's selection among the received broadcasting signals.

The at least one particular area is an area having a predetermined shape which occupies a predetermined location and size in at least one frame of a broadcasting signal. The particular area may be indicated by (x, y), i.e., with respect to X and Y axes of a frame.

The 3D information includes location information in a frame of the at least one particular area. The 3D information further includes depth information for the particular area. The depth information includes information corresponding to a Z axis, i.e., with respect to X, Y and Z axes for the particular area in the frame. The depth information includes data regarding a distance of a subject (i.e., from a predetermined location, such as the lens of a camera) which may be acquired by filming the subject through an infrared 3D camera (e.g., Z-CAM). With the depth information, a real occupancy ratio of the subject, which is viewed in a 2D screen, may be calculated with respect to the real 3D space.

The signal processor 120 may extract 3D information of the at least one particular area from the received broadcasting signal, register at least one additional image to the at least one particular area by using the extracted 3D information, and produce and output a broadcasting image registering the at least one additional image thereto.

The broadcasting signal includes 3D information of at least one particular area. The signal processor 120 may extract 3D information of the at least one particular area.

The signal processor 120 may include an additional image warping unit 121 and an image registration producer 122. The additional image warping unit 121 may warp at least one additional image by using the extracted 3D information. The 3D information of the particular area includes location information on location, size and shape of the particular area in the frame, and depth information of the distance of the area.

The additional image warping unit 121 may warp the additional image corresponding to the 3D information. Then, the size, shape and inclination of the additional image may be warped corresponding to the 3D information.

The image registration producer 122 may register the warped additional image to the particular area and produce a broadcasting image registering the additional image thereto.

If the received broadcasting signal is a 3D image signal including a left eye image and a right eye image, the signal processor 120 may calculate the depth information of the particular area of the broadcasting image based on a focus of the left eye image and the right eye image.

The display unit 130 may display thereon the broadcasting image registering the additional image thereto and output by the signal processor 120. The display unit 130 may include a liquid crystal display (LCD) panel, an organic light emitting diode (OLED) including an organic light emitting layer or a plasma display panel (PDP).

A display apparatus according to another exemplary embodiment of the present invention may further include a second receiver 140, a storage unit 150, a user input receiver 160 and a controller 170.

The second receiver 140 may receive at least one additional image to be registered to the particular area. The second receiver 140 may receive an additional image transmitted by a broadcasting transmission device through a cable, satellite and/or terrestrial type. The additional image may include a broadcasting image received from the broadcasting transmission device, or an advertisement image for advertising a particular product or service.

The second receiver 140 may receive the additional image of the broadcasting signal received from the same device as the broadcasting transmission device from which the receiver 110 receives and/or from other broadcasting transmission devices.

The second receiver 140 may receive the additional image from a local cable broadcasting transmission device. In this case, the additional image may include an image related to a region and/or an advertisement image related to the region received from the regional broadcasting transmission device. Thus, a user may enjoy more friendly and useful information because the display apparatus according to the exemplary embodiment of the present invention may provide a broadcasting image registering the additional image, based on the region where he/she resides, to the particular area of the broadcasting image.

The second receiver 140 may include a communication unit to communicate with an external PC and/or a Web server. The second receiver 140 may include a communication protocol to communicate with the external PC and/or the Web server. Thus, the second receiver 140 may receive the additional image from the external PC and/or the Web server.

The additional image may be plurally received through the second receiver 140.

The additional image may include image information. That is, the image information may act as a tag to express the image implicitly. For example, if the additional image includes an automobile advertisement image for a particular company, image information of "automobile" as a tag may be included in the additional image. The image information may be extracted by the signal processor 120 and transmitted to the controller 170 (to be described later).

The storage unit 150 may store therein at least one additional image.

The additional image may include all types of images stored in the storage unit 150 other than those received by the second receiver 140.

At least one additional image which is received by the second receiver 140 may be stored in the storage unit 150.

The storage unit 150 may store therein a plurality of additional images.

The user input receiver 160 may receive information of a user's interest (i.e., a category of information of which a user may have an interest) for the additional image. That is, a user may input a particular interest category such as sports, automobile and clothes. The interest category which is input by a user may be stored in the storage unit 150.

The user input receiver 160 may include a button provided in the display apparatus and/or a wired/wireless remote controller. The user input receiver 160 may further include a touch screen with a touch panel.

Among at least one additional image which is received by the second receiver 140 and/or stored in the storage unit 150, the controller 170 may select an additional image corresponding to a user's interest category received through the user input receiver 160. The controller 170 may control the signal processor 120 to register the selected additional image to the particular area. The controller 170 may select the additional image corresponding to a user's interest category among the additional images to thereby provide useful and/or interesting information.

The process of selecting the additional image by the controller 170 is as follows.

The additional image includes image information of the image. The signal processor 120 may extract the image information from the additional image and transmit the image information to the controller 170. The controller 170 may determine whether the extracted image information is consistent with a user's interest category received through the user input receiver 160, and select the additional information if they are consistent with each other.

The controller 170 may select the additional image through metadata and control the signal processor 120 to register the additional image to the particular area.

The metadata may include information stored in the storage unit 150. The metadata includes user's profile information, channel history, electronic program guide (EPG) data and data on the character of programs. A user's favorite channel and/or viewing time may be known by the metadata and then information regarding the user's interest (i.e., the user's interest category) may be acquired.

The controller 170 may select the additional image corresponding to a user's interest among the at least one additional image received by the receiver 140 and/or stored in the storage unit 150 through the metadata. The display apparatus according to the exemplary embodiment of the present invention may register the additional image, including useful and friendly information, to the particular area of the broadcasting image to thereby enhance user's convenience.

The controller 170 may compare image information of the additional image and the user's interest category acquired through the metadata, and select the additional image among a plurality of additional images.

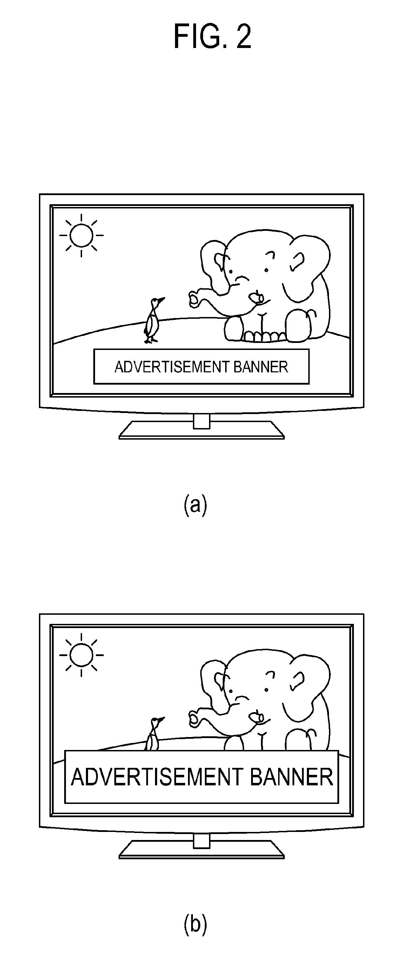

FIG. 2 illustrates an example of registering an image to a conventional broadcasting signal.

In FIG. 2(A), a 2D image (advertisement banner) is simply combined to a broadcasting signal and displayed on a screen. Even at a glance, it may be recognized that the combined image is not related to the broadcasting image.

Referring to FIG. 2(B), the combined image (advertisement banner) may be enlarged but a different image from the broadcasting image accounts for almost 1/5 of the screen, causing inconvenience in viewing the broadcasting image. A user who does not desire to view the different image from the broadcasting image may feel uncomfortable.

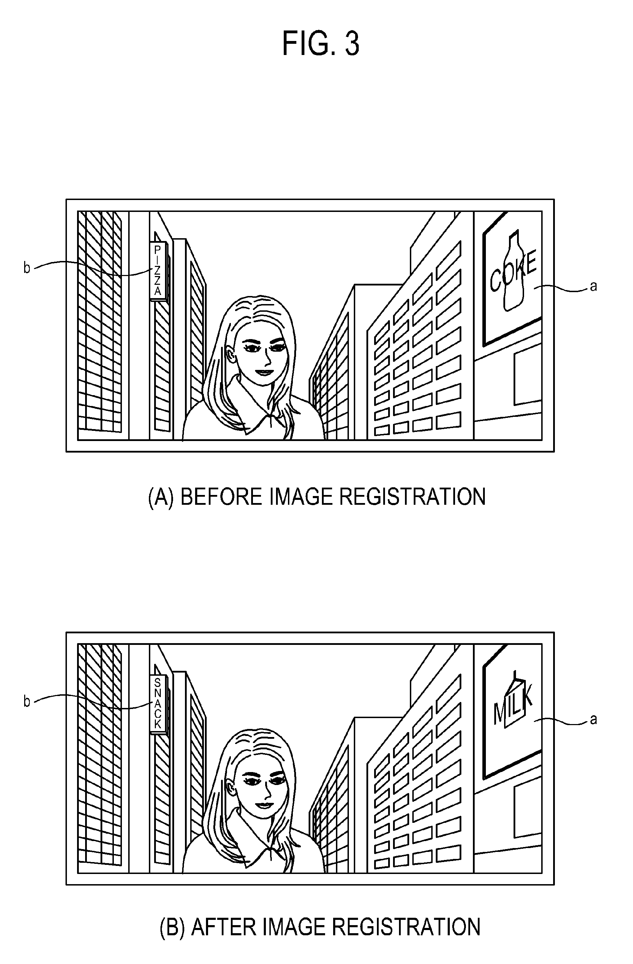

FIG. 3 illustrates an example of registering the additional image to the broadcasting image according to an exemplary embodiment of the present invention.

FIG. 3 illustrates a scene filmed on the real street in which a woman is standing on the street with the building in the back. There are a lot buildings and advertisement banners installed at the building, i.e., a and b in FIG. 3(A).

In this case, the advertisement banners a and b act as indirect advertisements regardless of a producer's intention.

Then, a broadcasting station may transmit a broadcasting which has a particular area, i.e., indirect advertisement, replaced with another image.

Referring to FIG. 3(B), an additional image is warped and registered to the particular area of a and b in FIG. 3(A).

That is, the display apparatus according to the exemplary embodiment of the present invention may extract 3D information (location, size, shape and depth information) of the particular areas a and b, generate an additional image which is warped and register the warped additional image to the particular areas to thereby produce and display the image registration. A user may feel as if the additional image registered to the particular area is the original broadcasting image. A user may view the broadcasting image and the additional image without feeling a sense of incompatibility.

The additional image which is registered to the particular area of the broadcasting image may include an image related to the broadcasting image, an advertisement image of an advertiser, a local advertisement image of a local broadcasting station and any other images corresponding to a category of a user's interest.

A user may acquire useful information of his/her interest and the broadcasting station may register an advertisement image for a product for which the broadcasting station is paid with advertisement fee to the broadcasting image.

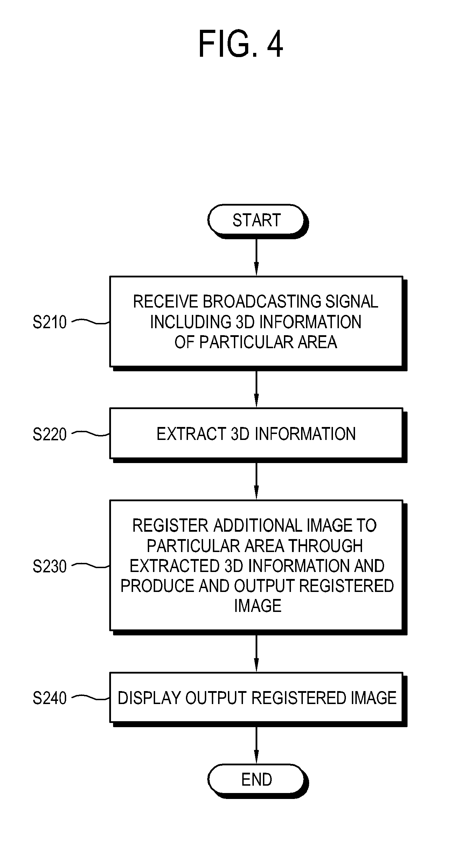

FIG. 4 is a flowchart of a process of producing the image registration according to an exemplary embodiment of the present invention.

If the receiver 110 receives the broadcasting signal including 3D information of the particular area (S210), the signal processor 120 extracts the 3D information of the particular area from the received broadcasting signal (S220).

The signal processor 120 registers the additional image to the particular area by using the extracted 3D information and produces and outputs the registered image (S230). The output registered image is displayed on the display unit 130 (S240).

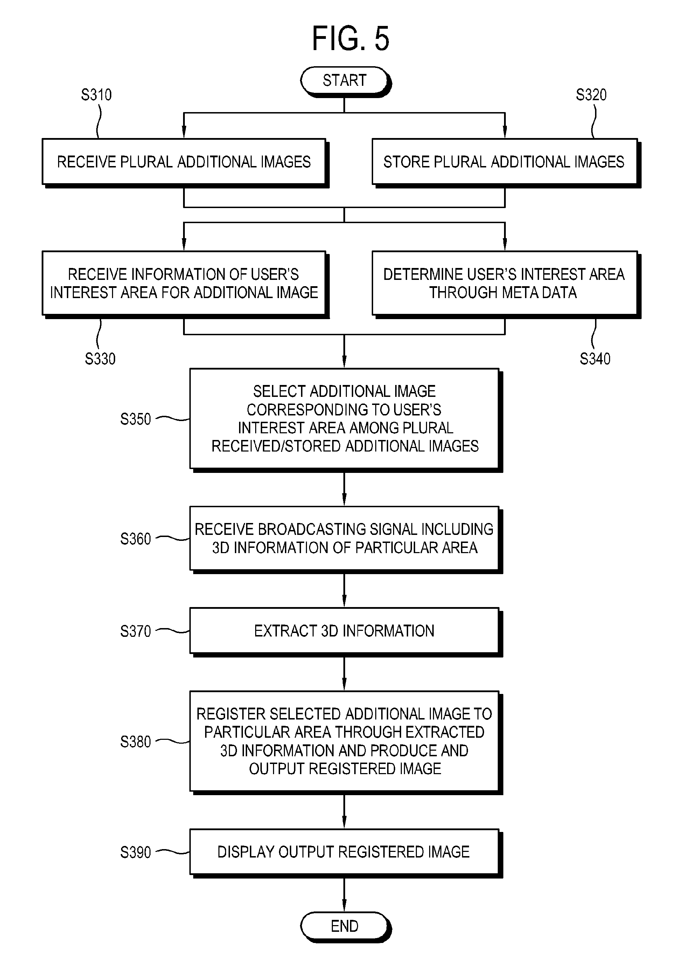

FIG. 5 is a flowchart of a process for producing the image registration according to another exemplary embodiment of the present invention.

A plurality of additional images are received by the second receiver 140 (S310) and/or stored in the storage unit 150 (S320). The additional image may include image information of the image.

The user input receiver 160 may receive information of a user's interest regarding the additional image (S330). The controller 170 may determine a user's interest through the metadata (S340).

Among the plurality of received and/or stored additional images, the controller 170 may select the additional image corresponding to the user's interest (S350).

If the broadcasting signal including the 3D information of the particular area is received by the receiver 110 (S360), the signal processor 120 may extract the 3D information of the particular area (S370) and warp and register the selected additional image to the particular area by using the extracted 3D information (S380). The registered image is displayed on the display unit 130 (S390).

Another aspect of the present invention provides a method for producing an image registration of a display apparatus. The method is described above with reference to FIGS. 4 and 5, and repetitive description will be avoided.

Although a few exemplary embodiments have been shown and described, changes may be made in these exemplary embodiments without departing from the principles of the invention, the scope of which is defined in the appended claims.

## Claims

1. A display apparatus comprising:
a receiver which receives a broadcasting signal comprising information about a broadcast image and three-dimensional (3D) information of at least one area of the broadcast image;
a signal processor which extracts the 3D information of the at least one area from the received broadcasting signal, registers at least one additional image to the at least one area using the extracted 3D information and outputs an output signal including the registered at least one additional image; and
a display unit which displays the broadcasting image output by the signal processor.

2. The display apparatus according to claim 1, wherein the 3D information comprises location information of the at least one area.

3. The display apparatus according to claim 2, wherein the 3D information further comprises depth information of the at least one area.

4. The display apparatus according to claim 1, further comprising a second receiver which receives the at least one additional image.

5. The display apparatus according to claim 1, further comprising a storage unit which stores the at least one additional image.

6. The display apparatus according to claim 1, further comprising a user input receiver which receives information of a user's interest for the at least one additional image, and a controller which selects the additional image, based on the received user's interest, from among a received additional image and a stored additional image, and controls the signal processor to register the selected additional image to the area.

7. The display apparatus according to claim 1, further comprising a controller which selects the at least one additional image, based on metadata, from among a received additional image and a stored additional image, and controls the signal processor to register the selected additional image to the area.

8. The display apparatus according to claim 1, wherein the signal processor further warps the least one additional image and registers the warped at least one additional image to the area.

9. A method for producing an image registration of a display apparatus, the method comprising:
receiving a broadcasting signal comprising information about a broadcast image and three-dimensional (3D) information of at least one area of the broadcast image;
extracting the 3D information from the received broadcasting signal;
registering the at least one additional image to the at least one area using the extracted 3D information; and
displaying an output image including the registered at least one additional image.

10. The method according to claim 9, wherein the 3D information further comprises location information of the at least one area; and depth information of the at least one area.

11. The method according to claim 9, further comprising receiving the at least one additional image.

12. The method according to claim 9, further comprising storing the at least one additional image.

13. The method according to claim 9, further comprising receiving information of a user's interest for the at least one additional image; and
selecting the at least one additional image, based on the received user's interest, from among a received additional image and a stored additional image, wherein the registering includes registering the selected additional image to the area.

14. The method according to claim 9, further comprising selecting the at least one additional image, based on metadata, from among a received additional image and a stored additional image.

15. The method according to claim 9, the method further comprising warping the at least one additional image, wherein the registering includes registering the warped at least one additional image to the area.
